# EUROPEAN PATENT APPLICATION

(11) **EP 0 881 481 A1**
(43) Date of publication of application: **02.12.1998**
(21) Application number: 97940414.2
(22) Date of filing: 18.09.1997
(51) Int. Cl.: G01N 1/30

(54) **LIQUID TREATMENT METHOD FOR SAMPLES FOR MICROSCOPY**

(30) Priority: 18.09.1996 JP 246602/96
(71) Applicant: KABUSHIKI KAISHA TIYODA SEISAKUSHO, Koushoku-Shi Nagano-Ken 387 (JP); Sakura Finetechnical Co.,Ltd., Chuo-ku, Tokyo 103 (JP)
(72) Inventor: TATEYA, Hiroe, Nagano 381-22 (JP)
(74) Representative: Higgins, Michael Roger
(86) International application number: JP9703300
(87) International publication number: WO9812534

(57) **Abstract**

On an automatic staining apparatus for staining specimens for microscopic observation, glass slides (12) contained in a staining basket (6) are immersed completely in rinsing water (11) contained in a liquid vessel (2), and then the glass slides (12) are raised completely above the rinsing water (11). These operations are repeated to promote the replacement of the rinsing water (11) filling the spaces (13) between adjacent glass slides (12) with the new rinsing water (11), whereby the process of rinsing off a staining chemical solution from the glass slides (12) can be effectively achieved.

## Description

### TECHNICAL FIELD

The present invention relates to a method of liquid-treating tissues or cells of living things (hereinafter referred to as "specimen") for microscopic observation or inspection in clinics, hospitals and research laboratories and, more particularly, to improvements in a rinsing method of rinsing off chemicals from a glass slide on an automatic staining apparatus for staining a specimen for microscopic observation.

### BACKGROUND ART

In clinics and hospitals, microscopic observation of specimens sampled by excising the diseased parts is performed frequently for the diagnosis of diseases. A specimen affixed to a glass slide is stained to facilitate the diagnosis of a disease through the microscopic observation of the specimen, and various automatic staining apparatus capable of automatically staining a specimen have been proposed.

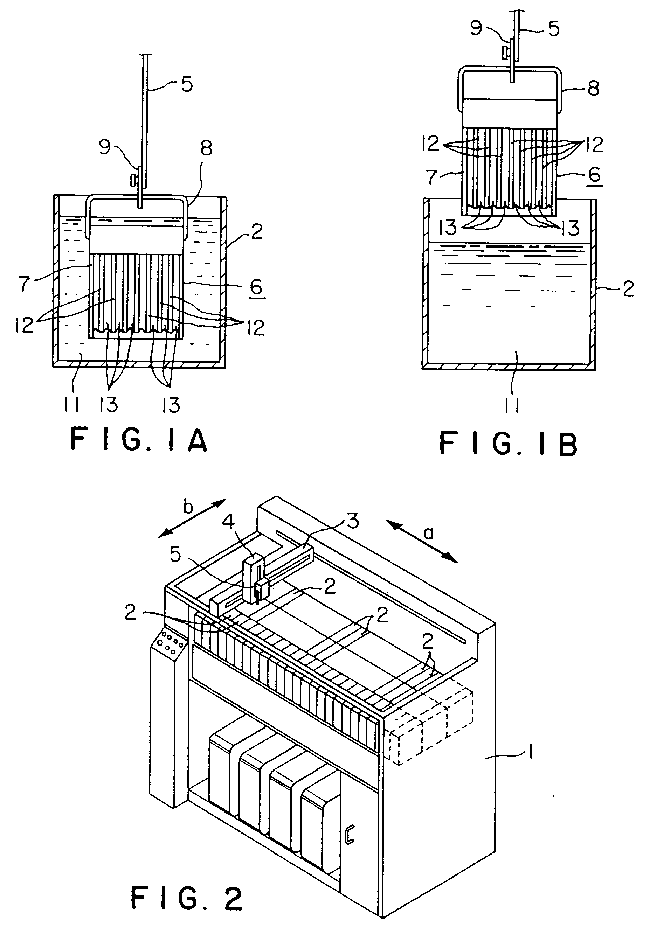

Fig. 2 shows, by way of example, an automatic staining apparatus disclosed in JP-U 5-66543A. A plurality of liquid vessels 2 respectively having open upper ends and containing chemical solutions necessary for staining processes are disposed in an array in an upper section of the interior of a cabinet 1. Some of the liquid vessels 2 are rinsing containers to which rinsing water, such as tap water, can be supplied, and the rest are chemical solution containers respectively containing chemical solutions necessary for staining processes. Disposed above the liquid vessels 2 is a three-dimensional driving mechanism comprising a movable beam 3 capable of moving in a horizontal plane in lateral directions (in the directions of the arrows a shown in Fig. 2), a movable column 4 capable of moving along the movable beam 3 in a horizontal plane in longitudinal directions (in the directions of the arrows b), a hanger arm 5 capable of vertically moving along the movable column 4.

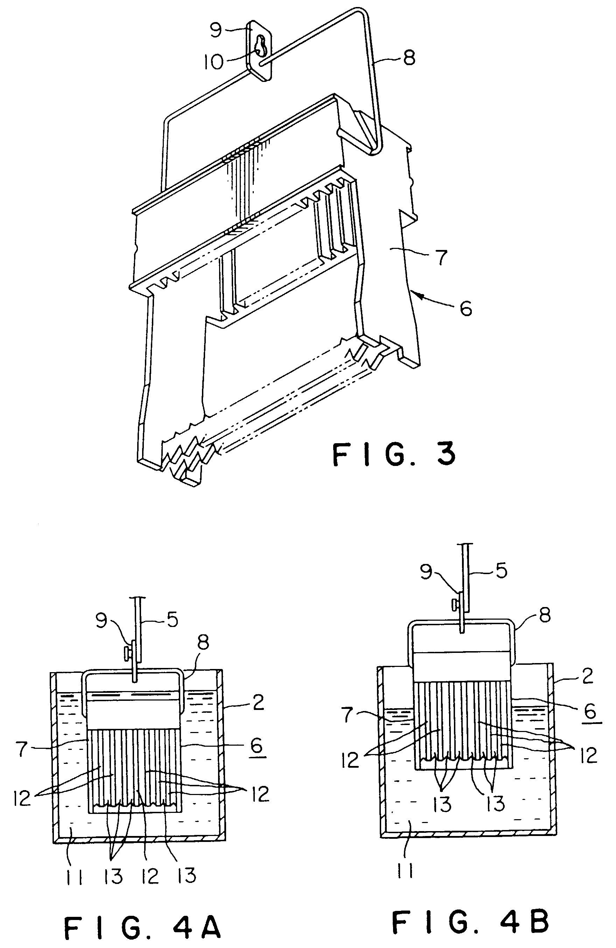

A staining basket 6 as shown in Fig. 3 can be detachably hung on the hanger arm 5. The staining basket 6 has a glass slide containing part 7, a handle 8, and a suspension plate 9 placed at the middle part of the handle 8. An extremity of the hanger arm 5 is inserted in an opening 10 formed in the suspension plate 9. The hanger arm 5 supporting the suspension plate 9 is lowered to immerse the staining basket 6 in the liquid tank 2.

When staining a specimen by using the thus constructed automatic staining apparatus, the staining basket 6 containing glass slides carrying specimens affixed thereto is hung on the hanger arm 5. Then, the three-dimensional driving mechanism is actuated, and the movable beam 3, the movable column 4 and the hanger arm 5 are moved by signals provided by a controller, not shown, to immerse the staining basket 6 for predetermined times sequentially in the chemical solutions contained in the liquid vessels 2 in a predetermined order. This operation is repeated a predetermined numbers to stain the specimen. A prior art multiple staining process disclosed in JP 6-100522B processes a plurality of staining baskets 6 simultaneously on an automatic staining apparatus similar to the foregoing automatic staining apparatus to stain an increased number of specimens efficiently.

The staining basket 6 containing glass slides respectively carrying specimens affixed thereto is disengaged from the hanger arm 5 while the same is immersed in a liquid chemical for a predetermined time, and another staining basket 6 is hung on the hanger arm 5 to carry the staining basket 6 to a predetermined liquid vessels 2 and to immerse the same in a chemical solution contained in the predetermined liquid vessel 2. Such an operation is executed for a plurality of staining baskets 6 for the parallel processing of specimens carried by the plurality of staining baskets 6. Upon the completion of immersion of any one of the plurality of staining baskets 6 in the chemical solution for the predetermined time, the hanger arm 5 is brought into engagement with the same staining basket 6 to carry the same staining basket 6 to the next liquid vessel 2. Since the plurality of staining baskets 6 can be simultaneously processed by repeating such operations, an increased number of specimens can be stained in a short time. This multiple staining process can be achieved by previously storing a procedure including those operations in the controller.

When staining the specimens affixed to the glass slides by the foregoing procedure by immersing the staining basket 6 first in a first chemical solution contained in the predetermined liquid vessel 2 and then immersing the staining basket 6 in a second chemical solution contained in another liquid vessel 2, the staining basket 6 and the glass slides contained in the staining basket 6 must be washed after the staining basket 6 has been pulled out of the first chemical solution and before the same is immersed in the second chemical solution to rinse off the first chemical solution from the staining basket 6 and the glass slides contained in the staining basket 6. The staining basket 6 and the glass slides must be thus washed to stop chemical reaction of the first chemical solution and to prevent the deterioration of the second chemical solution by the first chemical solution mixed with the second chemical solution.

Therefore, as shown in Figs. 4A and 4B, the conventional automatic staining apparatus washes the staining basket 6 and the glass slides 12 contained in the staining basket 6 to rinse off the first chemical solution from the staining basket 6 and the glass slides 12 after the staining basket 6 has been pulled out of the first chemical solution. The hanger arm 5 supporting the staining basket 6 is moved to a position above the liquid vessel (rinsing vessel) 2 containing rinsing water 11, and then the hanger arm 5 is lowered to immerse the staining basket 6 in the rinsing water 11. Subsequently, the hanger arm 5 is shaken vertically in a small stroke so that the staining basket 6 is reciprocated vertically between positions respectively shown in Figs. 4A and 4B to rinse off the first chemical solution from the staining basket 6 and the glass slides 12 contained in the staining basket 6.

The conventional automatic staining apparatus reciprocates the staining basket 6 in the rinsing water 11 with the specimens affixed to the glass slides 12 contained in the staining basket 6 kept immersed entirely or partly in the rinsing water 11. Therefore, it is difficult to change the old rinsing water in lower sections of spaces 13 between adjacent specimens 13 affixed to the glass slides 12 for the new rinsing water 11. Consequently, it is difficult to rinse off the first chemical solutions wetting parts of the glass slides 12 corresponding to the lower sections of the spaces 13.

Accordingly, the conventional automatic staining apparatus takes a long time for rinsing work and reciprocates the staining basket 6 vertically for a large number of cycles to rinse off the first chemical solution completely. Consequently, the staining work needs much time. When a plurality of staining baskets 6 are subjected simultaneously to the staining process, the staining baskets 6 cannot be processed if the hanger arm 5 is employed in the rinsing operation for a long time.

The present invention has been made to solve the foregoing problems and it is therefore an object of the present invention to provide a method of liquid-treating specimens for microscopic observation.

### DISCLOSURE OF THE INVENTION

According to a first aspect of the present invention, a method of liquid-treating specimens for microscopic observation which processes the specimens by immersing a basket containing a plurality of glass slides carrying the specimens affixed thereto in a vertical attitude with spaces formed between adjacent glass slides sequentially in liquids contained in a plurality of liquid vessels, comprises the steps of immersing the basket in a liquid contained in a liquid vessel by lowering the basket relative to the liquid vessel to a position corresponding to a level to make upper edges of the glass slides sink beneath the surface of the liquid contained in the liquid vessel, and raising the basket relative to the liquid vessel to a position corresponding to or above a level to locate lower ends of the specimens affixed to the glass slides above the surface of the liquid contained in the liquid vessel. Usually those steps are repeated.

According to a second aspect of the present invention, a method of liquid-treating specimens for microscopic observation which processes the specimens by immersing a basket containing a plurality of glass slides carrying the specimens affixed thereto in a vertical attitude with spaces formed between adjacent glass slides sequentially in liquids contained in a plurality of liquid vessel including chemical solution vessels containing chemical solutions and rinsing vessels containing a rinsing liquid comprises the steps of processing the specimens affixed to the glass slides with a chemical solution by immersing the basket in the chemical solution contained in the chemical solution vessel, immersing the glass slides in the rinsing liquid by lowering the basket relative to the rinsing vessel to a position corresponding to a level to make upper edges of the glass slides sink beneath the surface of the rinsing liquid, and raising the basket relative to the rinsing vessel to a position corresponding to or above a level to locate lower ends of the specimens affixed to the glass slides above the surface of the rinsing liquid contained in the rinsing vessel. Usually, the steps of immersing the basket in the rinsing liquid and raising the basket so that the lower ends of the specimens are located above the surface of the rinsing liquid are repeated.

Those steps may be repeated at the same rinsing vessel or may be repeated at different rinsing vessels. Typically, the step of processing the specimens with the chemical solution is a staining step and the rinsing liquid is water.

According to the present invention, most part of the rinsing liquid containing the chemical solution to be rinsed off and filling up the spaces between adjacent glass slides drops from the spaces, and the new rinsing liquid not containing the chemical solution or containing the chemical solution in a small concentration fills up the spaces when the glass slides are immersed again in the rinsing liquid. Consequently, the work for rinsing off the chemical solution from parts of the glass slides defining the spaces can be efficiently achieved.

### BRIEF DESCRIPTION OF THE DRAWINGS

Figs. 1A and 1B are schematic vertical sectional views explaining operations for rinsing off a chemical solution from glass slides with a rinsing liquid by a method of liquid-treating specimens according to the present invention;
Fig. 2 is a perspective view of an automatic staining apparatus for staining specimens for microscopic observation , suitable for carrying out the method of liquid-treating specimens according to the present invention;
Fig. 3 is a perspective view of an example of a staining basket; and
Figs. 4A and 4B are schematic vertical sectional views explaining operations for rinsing off a chemical solution from glass slides with a rinsing liquid by a conventional method of liquid-treating specimens.

### BEST MODE FOR CARRYING OUT THE INVENTION

Fig. 1 illustrates a method of liquid-treating specimens in a preferred embodiment according to the present invention. The method of liquid-treating specimens of the present invention to be carried out by a known automatic staining apparatus of the type previously described with reference to Fig. 2 for staining specimens for microscopic observation is characterized by its capability of effectively rinsing off a predetermined first chemical solution from a staining basket 6 and glass slides 12 contained in the staining basket 6 before immersing the staining basket 6 pulled out of a first chemical solution vessel containing the first chemical solution in a second chemical solution contained in a second chemical solution vessel. The configuration and functions of the automatic staining apparatus for staining specimens for microscopic observation are not limited to those of the automatic staining apparatus previously described with reference to Fig. 2 and hence the description thereof will be omitted. Only matters characterizing the present invention will be described.

The first chemical solution is rinsed off from the staining basket 6 and the glass slides 12 contained in the staining basket 6 before putting the staining basket 6 pulled out of the first chemical solution vessel containing the first chemical solution in the second chemical solution vessel containing the second chemical solution. A hanger arm 5 supporting the staining basket 6 is moved to a position above a rinsing vessel 2 containing rinsing water 11. Then, the hanger arm 5 is lowered to immerse the staining basket 6 in the rinsing water 11 contained in the rinsing vessel 2 so that the upper edges of the glass slides 12 contained in the staining basket 6 sink beneath the surface of the ringing liquid 11 as shown in Fig. 1A. Subsequently, the hanger arm 5 is raised so that the lower edges of the slide glasses 12 are located above the surface of the rinsing water 11 as shown in Fig. 1B. The staining basket 6 may be raised so that lower edges of the glass slides 12 are immersed in the rinsing water 11, but specimens affixed to the slides 12 are raised completely above the surface of the rinsing water 11. The hanger arm 5 is reciprocated vertically predetermined times between positions respectively shown in Figs. 1A and 1B.

The method of liquid-treating specimens of the present invention raises the hanger arm 5 to a position corresponding to a level to locate the lower ends of the specimens affixed to the glass slides 12 contained in the staining basket 6 above the surface of the rinsing water or to a position above the same level as shown in Fig. 1B to make most part of the rinsing liquid containing the chemical solution to be rinsed off and filling up the spaces 13 between adjacent glass slides 12 drop by gravity from the spaces 13. The staining basket 6 and the glass slide 12 may be vibrated to promote the dropping of the rinsing water containing the chemical solution from the spaces 13. The new rinsing liquid containing the chemical solution in a small concentration fills up the spaces 13 when the glass slides 12 are immersed again in the rinsing water. Consequently, the work for rinsing off the chemical solution from parts of the slides 12 defining the spaces 13 can be effectively achieved.

The method of liquid-treating specimens of the present invention described above carries out the work for immersing the staining basket 6 in the rinsing water 11 and raising the hanger arm 5 at the same rinsing vessel 2. The automatic staining apparatus may be provided with a plurality of rinsing vessels 2 containing rinsing water 11, and the chemical solution may be rinsed off from the glass slides 12 by immersing the staining basket 6 in the rinsing water 11 contained in the first rinsing vessel 2, pulling out the staining basket 6 from the first rinsing vessel 2 and immersing the basket 6 in the rinsing water 11 contained in the second rinsing vessel 2, the third rinsing vessel 2, ... and the nth rinsing vessel 2. It is also possible to hold the staining basket 6 stationary and to move the liquid vessel 2 vertically relative to the staining basket 6. However, it is preferable to move the staining basket 6 because moving the staining basket 6 requires less energy than moving the liquid vessels 2 and makes it difficult for the liquid contained in the liquid vessels 2 to spill.

Thus, the method of liquid-treating specimens of the present invention is capable of effectively rinsing the chemical solution from the glass slides and of reducing time necessary for completing the process for processing the specimens, such as a staining process. When a plurality of staining baskets are processed simultaneously, processing of the staining baskets is facilitated because time for which the hanger arm is employed in the rinsing work is reduced.

Since the chemical solution can be effectively rinsed off by the method of liquid-treating specimens of the present invention, non-uniform processing of the specimens, typically, non-uniform staining of the specimens, can be avoided and the staining performance is improved. When staining the specimens with a staining liquid, the residual staining liquid remaining on the glass slides and the staining basket can be rinsed off with a small quantity of rinsing liquid. When rinsing a glass slide basket and when immersing the slide glass basket in the chemical solution contained in the liquid vessel, the frequency of the stirring operation of the glass slide basket can be reduced, which is greatly effective when a plurality of slide glass baskets are processed simultaneously. Although the conventional method stirs the rinsing liquid and the chemical solution continuously when immersing the glass slide basket in the rinsing liquid contained in the rinsing vessel and in the chemical solution contained in the chemical solution vessel, the reduction of the frequency of stirring operation is very advantageous. The method of liquid-treating specimens of the present invention changes the liquid filling the spaces between the glass slides effectively and hence the pitches of the glass slides can be reduced, and the length of the arrangement of the glass slides can be reduced.

### INDUSTRIAL APPLICABILITY

The method of liquid-treating specimens of the present invention is applicable not only to rinsing glass slides contained in a staining basket and carrying specimens, such as pieces of tissues or cells of organisms, affixed thereto, with water contained in a rinsing vessel after a staining process, but also to changing a liquid filling up the spaces between the glass slides when immersing the glass slides in a liquid contained in a liquid container other than the rinsing water contained in the rinsing vessel.

## Claims

1. A method of liquid-treating specimens for microscopic observation which processes the specimens by immersing a basket containing a plurality of glass slides carrying the specimens affixed thereto in a vertical attitude with spaces formed between adjacent glass slides, sequentially in liquids contained in a plurality of liquid vessels, said method comprising the steps of:
immersing the basket in a liquid contained in a liquid vessel by lowering the basket relative to the liquid vessel to a position corresponding to a level to make upper edges of the glass slides sink beneath the surface of the liquid contained in the liquid vessel; and
raising the basket relative to the liquid vessel to a position corresponding to or above a level to locate lower ends of the specimens affixed to the glass slides above the surface of the liquid contained in the liquid vessel.

2. The method of liquid-treating specimens according to claim 1, wherein said steps are repeated.

3. A method of liquid-treating specimens for microscopic observation which processes the specimens by immersing a basket containing a plurality of glass slides carrying the specimens affixed thereto in a vertical attitude with spaces formed between adjacent glass slides sequentially in liquids contained in a plurality of liquid vessels including chemical solution vessels containing chemical solutions and rinsing vessels containing a rinsing liquid, said method comprising the steps of:
processing the specimens affixed to the glass slides with a chemical solution by immersing the basket in the chemical solution contained in the chemical solution vessel;
immersing the glass slides in the rinsing liquid by lowering the basket relative to the rinsing vessel to a position corresponding to a level to make upper edges of the glass slides sink beneath the surface of the rinsing liquid; and
raising the basket relative to the rinsing vessel to a position corresponding to or above a level to locate lower ends of the specimens affixed to the glass slides above the surface of the rinsing liquid contained in the rinsing vessel.

4. The method of liquid-treating specimens according to claim 3, wherein the steps of immersing the basket in the rinsing liquid and raising the basket so that the lower ends of the specimens are located above the surface of the rinsing liquid are repeated.

5. The method of liquid-treating specimens according to claim 4, wherein said steps are repeated at the same rinsing vessel.

6. The method of liquid-treating specimens according to claim 4, wherein said steps are repeated at different rinsing vessel.

7. The method of liquid-treating specimens according to claim 3, wherein the step of processing the specimens with the chemical solution is a staining step.

8. The method of liquid-treating specimens according to claim 3, wherein the rinsing liquid is water.
